# EUROPEAN PATENT SPECIFICATION

(11) **EP 4 393 859 B1**
(45) Date of publication and mention of the grant of the patent: **14.01.2026**
(21) Application number: 23187474.4
(22) Date of filing: 25.07.2023
(51) Int. Cl.: B66B 1/30

(54) **DRIVING SYSTEM FOR ELEVATOR**
ANTRIEBSSYSTEM FÜR AUFZUG
SYSTÈME D'ENTRAÎNEMENT POUR ASCENSEUR

(30) Priority: 26.12.2022 TW 111149904
(43) Date of publication of application: 03.07.2024
(73) Proprietor: APh ePower Co., Ltd., Kaohsiung City 821 (TW)
(72) Inventor: CHEN, Jyh-Wei, 821 Kaohsiung City (TW); SU, Hsiu-Hsien, 821 Kaohsiung City (TW); TZENG, Yun-Chi, 821 Kaohsiung City (TW)
(74) Representative: Becker, Eberhard

(56) References cited:
- US-A1- 2010 006 378
- US-A1- 2017 210 596
- US-B2- 7 896 137

## Description

### BACKGROUND

### Technical Field

The disclosure relates to a driving system, and in particular to a driving system for an elevator.

### Description of Related Art

The current elevator driving system has a capacitor device for storing power. When the voltage of the capacitor device is insufficient, the driving system uses a rectifier to rectify the external power source to perform a charging operation on the capacitor device. However, the capacitor device has larger capacitive impedance. When the voltage of the capacitor device is insufficient, the charging operation generates a very large charging current. The very large charging current may burn out the rectifier. Therefore, the driving system needs a slow start circuit to suppress the excessive charging current. However, the addition of the slow start circuit increases the cost of the driving system. Therefore, how to provide a driving system capable of reducing the charging current without the configuration of the slow start circuit is one of the research focuses of those skilled in the art.

US 2010/006378 Al relates to a system which drives an elevator hoist motor during normal and power failure conditions. US 2017/210596 A1 relates to a charge algorithm for battery propelled elevator for recovering energy associated with the operation of an elevator, by: determining a battery charging current, estimating a state of charge (SoC) of at least one battery based on charging current acceptance capability, and causing a charging of the at least one battery to within a threshold amount of 100% of SoC to recover energy associated with elevator operation.

### SUMMARY

The invention is set out in the appended set of claims. The following disclosure serves a better understanding of the present invention. The invention provides a driving system for an elevator, which reduces the charging current of the driving system without the configuration of a slow start circuit.

The driving system of the invention is configured for the elevator. The driving system includes a motor, a power source, a battery device, a conversion circuit, a power path circuit and a controller. The motor controls a movement of the elevator in response to a driving power. The power source provides a source power. The battery device stores a battery power. The power path circuit is coupled to the power source, the motor and the conversion circuit. The controller is coupled to the conversion circuit and the power path circuit. When the elevator is moving, the controller controls the power path circuit to generate a power delivering path between the conversion circuit and the motor, and controls the conversion circuit to convert the battery power into the driving power. When the elevator is at rest, the controller controls the power path circuit to generate a charging path between the conversion circuit and the power source, and controls the conversion circuit to convert the source power into the battery power.

Based on the above, when the elevator is moving, the controller controls the power path circuit to generate a power delivering path between the conversion circuit and the motor, and controls the conversion circuit to convert the battery power into the driving power. In addition, when the elevator is at rest, the controller controls the power path circuit to generate a charging path between the conversion circuit and the power source, and controls the conversion circuit to convert the source power into the battery power. Thus, once the elevator is at rest, the conversion circuit uses the battery power to charge the battery device. The voltage value of the battery device is maintained at a high voltage value. The charging current may be reduced. Therefore, the driving system of the invention does not need to be disposed with a slow start circuit. Furthermore, when the elevator is at rest, the conversion circuit converts the source power into the battery power. Therefore, the driving system of the disclosure does not need to be disposed with a rectifier. In this way, the cost of the driving system of the disclosure can be reduced.

### BRIEF DESCRIPTION OF THE DRAWINGS

FIG. 1 is a schematic diagram of a driving system according to a first embodiment of the disclosure.
FIG. 2 is a schematic diagram of a driving system according to a second embodiment of the disclosure.
FIG. 3 is a schematic circuit diagram of a driving system according to an embodiment of the disclosure.
FIG. 4 is a schematic circuit diagram of a driving system according to another embodiment of the disclosure.

### DESCRIPTION OF THE EMBODIMENTS

Some embodiments of the disclosure accompanied with drawings are described in detail as follows. The reference numerals used in the following description are regarded as the same or similar elements when the same reference numerals appear in different drawings. These embodiments are only a part of the disclosure, and do not disclose all the possible implementations of the disclosure. To be more precise, the embodiments are only examples in the scope of the claims of the disclosure.

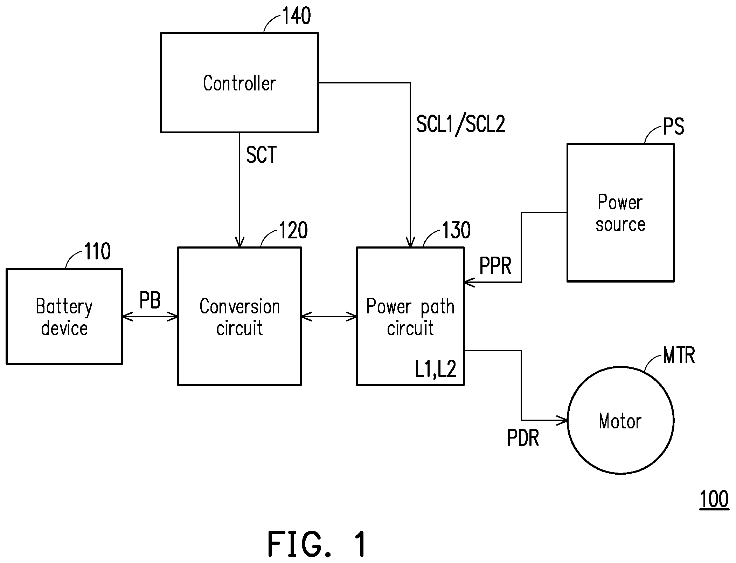

Please refer to FIG. 1, which is a schematic diagram of a driving system according to a first embodiment of the disclosure. In the embodiment, a driving system 100 may be configured to drive an elevator (not shown). The driving system 100 includes a motor MTR, a power source PS, a battery device 110, a conversion circuit 120, a power path circuit 130 and a controller 140. The motor MTR operates in response to a driving power PDR, thereby controlling a movement of the elevator. The power source PS provides a source power PPR. The power source PS may be a generator or a power transmission interface connected to external mains. The battery device 110 stores battery power PB. For example, the battery device 110 may be an aluminum battery device. In some embodiments, the battery device 110 may be other power storage devices. The disclosure is not limited to the implementation of the battery device 110.

The power path circuit 130 is coupled to the power source PS, the motor MTR and the conversion circuit 120.

In the embodiment, the controller 140 is coupled to the conversion circuit 120 and the power path circuit 130. The controller 140 determines whether the elevator is moving or at rest (e.g., staying on a specific floor). When the elevator is moving (that is, when the motor MTR is driven or needs to be driven), the controller 140 controls the power path circuit 130 to generate a power delivering path L1 between the conversion circuit 120 and the motor MTR, and controls the conversion circuit 120 to convert the battery power PB into the driving power PDR. Therefore, when the elevator is moving, the conversion circuit 120 is electrically connected to the motor MTR through the power delivering path L1. The motor MTR receives the driving power PDR through the power delivering path L1, thereby controlling the movement of the elevator.

When the elevator is at rest, the motor MTR stops operating (that is, when the motor MTR is stopped being driven). The controller 140 controls the power path circuit 130 to generate a charging path L2 between the conversion circuit 120 and the power source PS, and controls the conversion circuit 120 to convert the source power PPR into the battery power PB. Therefore, when the elevator is at rest, the conversion circuit 120 is electrically connected to the power source PS through the charging path L2. The battery device 110 receives the battery power PB through the charging path L2. The driving system 100 uses the battery power PB to charge the battery device 110. In other words, the driving system 100 charges the battery device 110 while the motor MTR stops operating.

For example, when the elevator is moving, the controller 140 provides a path control signal SCL1 to the power path circuit 130 and provides a conversion control signal SCT to the conversion circuit 120. The power path circuit 130 generates the power delivering path L1 in response to the path control signal SCL1. The conversion circuit 120 converts the battery power PB into the driving power PDR in response to the conversion control signal SCT. For another example, when the elevator is at rest, the controller 140 provides a path control signal SCL2 to the power path circuit 130 and stops providing the conversion control signal SCT to the conversion circuit 120. The power path circuit 130 generates the charging path L2 in response to the path control signal SCL2. The conversion circuit 120 converts the received source power PPR into the battery power PB when the conversion control signal SCT is not received. In the embodiment, the power delivering path L1 and the charging path L2 are provided in different periods.

It is worth mentioning here that when the elevator is moving, the controller 140 controls the power path circuit 130 to generate the power delivering path L1 between the conversion circuit 120 and the motor MTR, and controls the conversion circuit 120 to convert the battery power PB into the driving power PDR. In addition, when the elevator is at rest, the controller 140 controls the power path circuit 130 to generate the charging path L2 between the conversion circuit 120 and the power source PS, and controls the conversion circuit 120 to convert the source power PPR into the battery power PB. Therefore, the conversion circuit 120 uses the battery power PB to charge the battery device 110 during the period when the elevator is at rest. The voltage value of the battery device 110 is maintained at a high voltage value. The charging current may be reduced. Therefore, the driving system 100 does not need to be disposed with a slow start circuit to reduce the charging current. Furthermore, when the elevator is at rest, the conversion circuit 120 converts the source power PPR into the battery power PB. Therefore, the driving system 100 does not need to be disposed with a rectifier. In this way, the cost of the driving system 100 can be reduced.

In the embodiment, the controller 140 is, for example, a central processing unit (CPU), or other programmable general-purpose or special-purpose microprocessors, digital signal processors (DSPs), programmable controllers, application specific integrated circuits (ASICs), programmable logic devices (PLDs), or other similar devices or a combination of the aforementioned devices, which may load and execute computer programs.

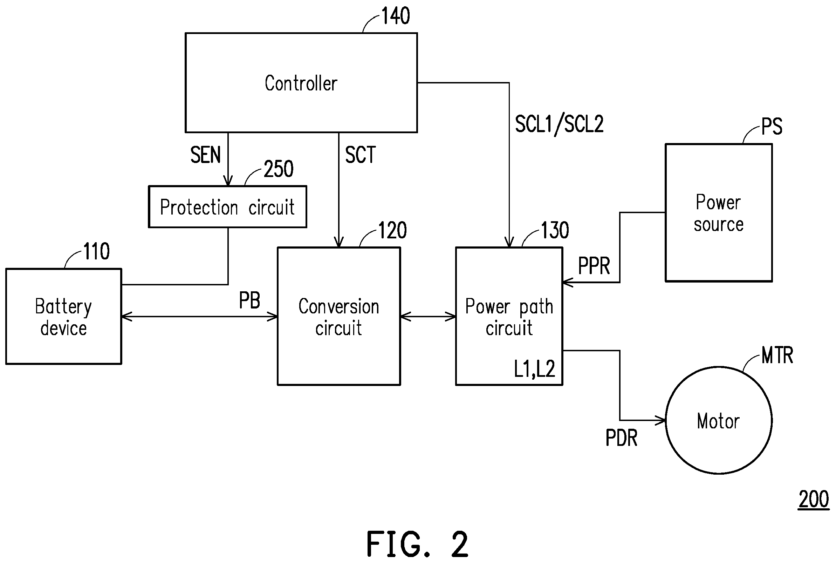

Please refer to FIG. 2, which is a schematic diagram of a driving system according to a second embodiment of the disclosure. In the embodiment, a driving system 200 includes the motor MTR, the power source PS, the battery device 110, the conversion circuit 120, the power path circuit 130, the controller 140 and a protection circuit 250. The operations of the motor MTR, the power source PS, the battery device 110, the conversion circuit 120, the power path circuit 130 and the controller 140 have been clearly described in the embodiment of FIG. 1, so the descriptions are not repeated here. The protection circuit 250 is coupled to the battery device 110 and the controller 140. The controller 140 enables the protection circuit 250 according to the voltage value of the battery power PB. For example, when the voltage value of the battery power PB is greater than a preset value (e.g., 340 volts), the controller 140 provides an enable signal SEN to the protection circuit 250. The protection circuit 250 reduces the voltage value of the battery power PB (e.g., to about 315 volts) in response to the enable signal SEN. In this way, the controller 140 and the protection circuit 250 can prevent the battery power PB from having an excessively high voltage value. The service life of the battery device 110 and the conversion circuit 120 can be extended.

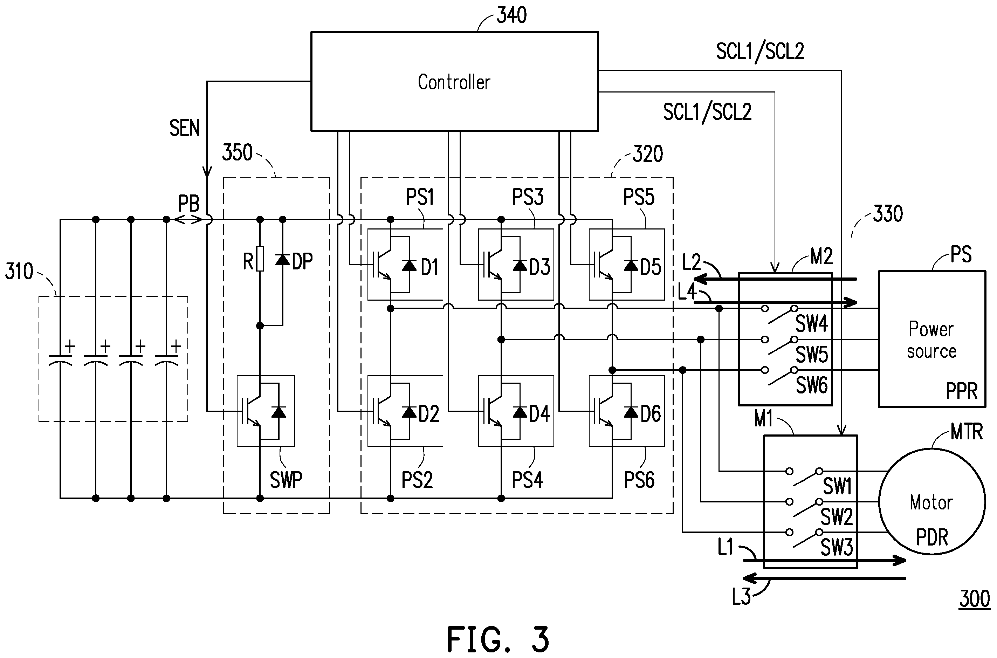

Please refer to FIG. 3, which is a schematic circuit diagram of a driving system according to an embodiment of the disclosure. In the embodiment, a driving system 300 includes the motor MTR, the power source PS, a battery device 310, a conversion circuit 320, a power path circuit 330, a controller 340 and a protection circuit 350. Taking the embodiment as an example, the power source PS is, for example, a three-phase alternating current (AC) power source. Therefore, the source power PPR includes the voltages of the three AC phases. The battery power PB is, for example, a direct current (DC) power source. The motor MTR is, for example, a three-phase motor.

In the embodiment, the conversion circuit 320 includes power switches PS1 to PS6. The power switch PS1 has a diode D1. The first terminal of the power switch PS1 is coupled to the first terminal of the battery device 310. The second terminal of the power switch PS1 is coupled to the power path circuit 330. The control terminal of the power switch PS1 is coupled to the controller 340. The power switch PS2 has a diode D2. The first terminal of the power switch PS2 is coupled to the second terminal of the power switch PS1. The second terminal of the power switch PS2 is coupled to the second terminal of the battery device 310. The control terminal of the power switch PS2 is coupled to the controller 340.

In addition, the cathode of the diode D1 is coupled to the first terminal of the power switch PS1. The anode of the diode D1 is coupled to the second terminal of the power switch PS1. The cathode of the diode D2 is coupled to the first terminal of the power switch PS2. The anode of the diode D2 is coupled to the second terminal of the power switch PS2. In the embodiment, the power switch PS1 and the power switch PS2 form a first bridge arm in the conversion circuit 320.

The power switch PS3 has a diode D3. The first terminal of the power switch PS3 is coupled to the first terminal of the battery device 310. The second terminal of the power switch PS3 is coupled to the power path circuit 330. The control terminal of the power switch PS3 is coupled to the controller 340. The power switch PS4 has a diode D4. The first terminal of the power switch PS4 is coupled to the second terminal of the power switch PS3. The second terminal of the power switch PS4 is coupled to the second terminal of the battery device 310. The control terminal of the power switch PS4 is coupled to the controller 340.

In addition, the cathode of the diode D3 is coupled to the first terminal of the power switch PS3. The anode of the diode D3 is coupled to the second terminal of the power switch PS3. The cathode of the diode D4 is coupled to the first terminal of the power switch PS4. The anode of the diode D4 is coupled to the second terminal of the power switch PS4. In the embodiment, the power switch PS3 and the power switch PS4 form a second bridge arm in the conversion circuit 320.

The power switch PS5 has a diode D5. The first terminal of the power switch PS5 is coupled to the first terminal of the battery device 310. The second terminal of the power switch PS5 is coupled to the power path circuit 330. The control terminal of the power switch PS5 is coupled to the controller 340. The power switch PS6 has a diode D6. The first terminal of the power switch PS6 is coupled to the second terminal of the power switch PS5. The second terminal of the power switch PS6 is coupled to the second terminal of the battery device 310. The control terminal of the power switch PS6 is coupled to the controller 340.

In addition, the cathode of the diode D5 is coupled to the first terminal of the power switch PS5. The anode of the diode D5 is coupled to the second terminal of the power switch PS5. The cathode of the diode D6 is coupled to the first terminal of the power switch PS6. The anode of the diode D6 is coupled to the second terminal of the power switch PS6. In the embodiment, the power switch PS5 and the power switch PS6 form a third bridge arm in the conversion circuit 320.

In the embodiment, the power switches PS1 to PS6 may be respectively implemented by at least one insulated gate bipolar transistor (IGBT) or at least one N-type field effect transistor (FET) in any form.

In the embodiment, the power path circuit 330 includes path switch circuits M1 and M2. The path switch circuit M1 is coupled between the conversion circuit 320 and the motor MTR. The path switch circuit M2 is coupled between the conversion circuit 320 and the power source PS. The path switch circuit M1 generates the power delivering path L1 in response to the path control signal SCL1, and stops generating the power delivering path L1 in response to the path control signal SCL2. The path switch circuit M2 generates the charging path L2 in response to the path control signal SCL2, and stops generating the charging path L2 in response to the path control signal SCL1.

In the embodiment, the path switch circuit M1 includes switches SW1 to SW3. The first terminal of the switch SW1 is coupled to the second terminal of the power switch PS1. The second terminal of the switch SW1 is coupled to the motor MTR. The first terminal of the switch SW2 is coupled to the second terminal of the power switch PS3. The second terminal of the switch SW2 is coupled to the motor MTR. The first terminal of the switch SW3 is coupled to the second terminal of the power switch PS5. The second terminal of the switch SW3 is coupled to the motor MTR.

The path switch circuit M2 includes switches SW4 to SW6. The first terminal of the switch SW4 is coupled to the second terminal of the power switch PS1. The second terminal of the switch SW4 is coupled to the power source PS to receive a first AC phase voltage of the source power PPR. The first terminal of the switch SW5 is coupled to the second terminal of the power switch PS3. The second terminal of the switch SW5 is coupled to the power source PS to receive a second AC phase voltage of the source power PPR. The first terminal of the switch SW6 is coupled to the second terminal of the power switch PS5. The second terminal of the switch SW6 is coupled to the power source PS to receive a third AC phase voltage of the source power PPR.

In the embodiment, the switches SW1 to SW6 may be implemented by transistor switches, transmission gates or relay switches respectively.

In the embodiment, when the elevator is moving, the controller 340 turns on the path switch circuit M1 and turns off the path switch circuit M2. The switches SW1 to SW3 are turned on. The switches SW4 to SW6 are turned off. Accordingly, the power delivering path L1 is generated. In addition, the controller 340 controls the conversion circuit 320 to serve as a multi-phase power inverter. Therefore, the conversion circuit 320 receives the battery power PB, and converts the battery power PB into the driving power PDR.

In the embodiment, when the conversion circuit 320 is controlled to serve as a multi-phase power inverter, the first bridge arm (i.e., the power switch PS1 and the power switch PS2) outputs a first-phase driving power in the driving power PDR. The switch SW1 that is turned on transmits the first-phase driving power to the motor MTR. The second bridge arm (i.e., the power switch PS3 and the power switch PS4) outputs a second-phase driving power in the driving power PDR. The switch SW2 that is turned on transmits the second-phase driving power to the motor MTR. In addition, the third bridge arm (i.e., the power switch PS5 and the power switch PS6) outputs a third-phase driving power in the driving power PDR. The switch SW3 that is turned on transmits the third-phase driving power to the motor MTR. Therefore, when the elevator is moving, the motor MTR can operate in response to the driving power PDR.

In the embodiment, when the elevator is at rest, the controller 340 turns on the path switch circuit M2 and turns off the path switch circuit M1. The switches SW4 to SW6 are turned on. The switches SW1 to SW3 are turned off. Accordingly, the charging path L2 is generated. In addition, the controller 340 turns off the power switches PS1 to PS6 of the conversion circuit 320 so that the conversion circuit 320 serves as a rectification circuit. Therefore, the conversion circuit 320 can receive the source power PPR through the switches SW4 to SW6 that are turned on, and use the diodes D1 to D6 to rectify the voltages of the three AC phases of the source power PPR to generate the battery power PB. Therefore, when the elevator is at rest, the conversion circuit 320 can use the battery power PB to charge the battery device 310.

In the embodiment, the protection circuit 350 includes a resistor R and a protection switch SWP. The first terminal of the resistor R is coupled to the first terminal of the battery device 310. The first terminal of the protection switch SWP is coupled to the second terminal of the resistor R. The second terminal of the protection switch SWP is coupled to the second terminal of the battery device 310. The control terminal of the protection switch SWP is coupled to the controller 340. For example, when the controller 340 senses that the voltage value of the battery power PB is greater than a preset value (e.g., 340 volts), the controller 340 provides the enable signal SEN to the protection circuit 350. The protection switch SWP is turned on in response to the enable signal SEN. This causes the resistor R to drain the battery power PB. Therefore, the voltage value of the battery power PB is reduced (e.g., to about 315 volts). When the voltage value of the battery power PB is reduced to a desired voltage value (e.g., 315 volts), the controller 340 stops providing the enable signal SEN. Therefore, the protection switch SWP is turned off. The protection circuit 350 is disabled. In addition, the protection circuit 350 further includes a diode DP. The cathode of the diode DP is coupled to the first terminal of the resistor R. The anode of the diode DP is coupled to the second terminal of the resistor R. In the embodiment, the protection switch SWP may be implemented by an IGBT or any form of FET.

In some embodiments, during the movement of the elevator, the motor MTR may rotate without receiving the driving power PDR. In the above situation, the controller 340 controls the conversion circuit 320 to convert the power provided by the rotation of the motor MTR into the battery power PB. For example, an existing elevator includes a hanging block and an elevator car. If the weight of the hanging block of the elevator is greater than the weight of the elevator car of the elevator, the elevator car may use the gravity of the hanging block itself to rise while the elevator car is moving to a higher floor. Therefore, the motor MTR does not need the driving power PDR to rotate. Therefore, while the elevator is moving to a higher floor, the motor MTR rotates without receiving the driving power PDR to form a generator. In the above situation, the controller 340 controls the power path circuit 330 to generate a charging path L3 between the conversion circuit 320 and the motor MTR, and controls the conversion circuit 320 to serve as a rectifier, thereby converting the power provided by the motor MTR into the battery power PB. In this way, while the elevator car is rising, the battery device 310 can be charged when the motor MTR does not receive the driving power PDR. The charging path L3 is opposite to the power delivering path L1.

For another example, if the weight of the hanging block of the elevator is less than the weight of the elevator car of the elevator, the elevator car may use the gravity of the elevator car itself to descend while the elevator car is moving to a lower floor. During the descent of the elevator car, the motor MTR rotates without receiving the driving power PDR to form a generator. In the above situation, the controller 340 controls the power path circuit 330 to generate the charging path L3 between the conversion circuit 320 and the motor MTR, and controls the conversion circuit 320 to serve as a rectifier, thereby converting the power provided by the motor MTR into the battery power PB.

It should be understood that, in the embodiments shown in FIG. 1 and FIG. 2, while the elevator is moving, the motor MTR may rotate without receiving the driving power PDR. The controller 140 can also control the conversion circuit 120 to convert the power provided by the rotation of the motor MTR into the battery power PB.

In some embodiments, when the voltage value of the battery power PB stored in the battery device 310 is greater than a preset value (e.g., 340 volts), the controller 340 controls the power path circuit 330 to generate a power delivering path L4 between the conversion circuit 320 and the power source PS, and controls the conversion circuit 320 to serve as a multi-phase power inverter, thereby converting the battery power PB into the source power PPR, and providing the source power PPR to the power source PS. In this way, when the voltage value of the battery power PB stored in the battery device 310 is greater than a preset value, the battery power PB can be provided to an external mains power grid. The power delivering path L4 is opposite to the charging path L2.

In the above-mentioned embodiments, the power delivering path L4 and the charging path L3 are provided in different periods.

It should be understood that, in the embodiments shown in FIG. 1 and FIG. 2, when the voltage value of the battery power PB stored in the battery device 110 is greater than a preset value, the battery power PB can also be provided to an external mains power grid.

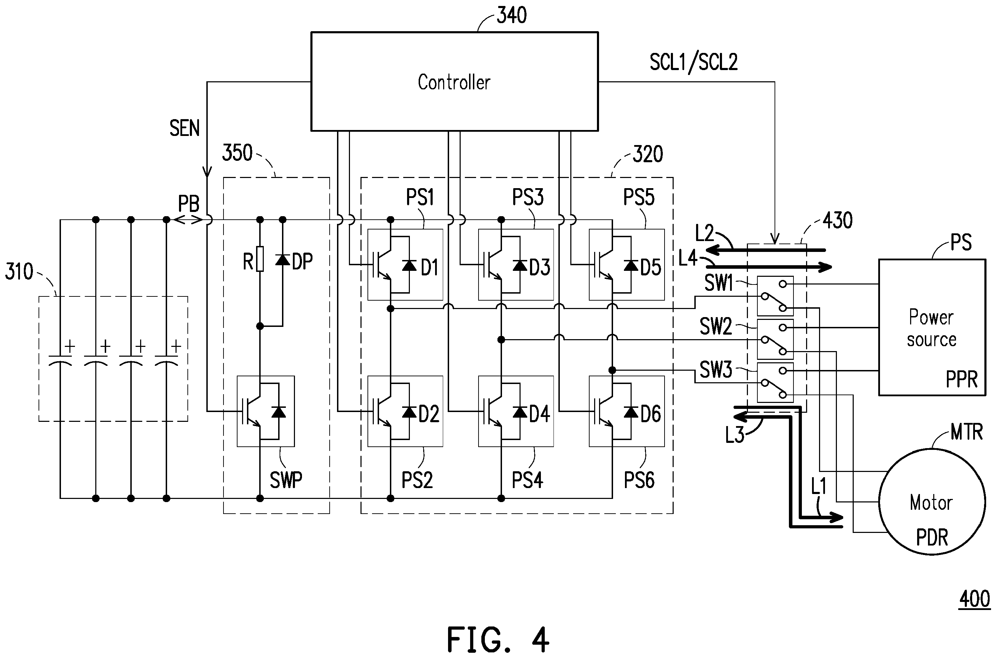

Please refer to FIG. 4, which is a schematic circuit diagram of a driving system according to another embodiment of the disclosure. A driving system 400 includes the motor MTR, the power source PS, the battery device 310, the conversion circuit 320, a power path circuit 430, the controller 340 and the protection circuit 350. The implementation details of the motor MTR, the power source PS, the battery device 310, the conversion circuit 320, the controller 340 and the protection circuit 350 have been clearly described in the embodiment of FIG. 3, so the descriptions are not repeated here. In the embodiment, the power path circuit 430 includes the switches SW1 to SW3. The switches SW1 to SW3 are single pole double throw (SPDT) switches respectively. In other words, the power path circuit 430 is implemented by multiple SPDT switches. For example, the switches SW1 to SW3 may be implemented by multiple transistor switches, multiple transmission gates or relay switches respectively.

In the embodiment, the first terminal of the switch SW1 is coupled to the second terminal of the power switch PS1. The second terminal of the switch SW1 is coupled to the motor MTR. The third terminal of the switch SW1 is coupled to the power source PS to receive the first AC phase voltage of the source power PPR. The first terminal of the switch SW2 is coupled to the second terminal of the power switch PS3. The second terminal of the switch SW2 is coupled to the motor MTR. The third terminal of the switch SW2 is coupled to the power source PS to receive the second AC phase voltage of the source power PPR. The first terminal of the switch SW3 is coupled to the second terminal of the power switch PS5. The second terminal of the switch SW3 is coupled to the motor MTR. The third terminal of the switch SW3 is coupled to the power source PS to receive the third AC phase voltage of the source power PPR.

In the embodiment, when the elevator is moving, the controller 340 provides the path control signal SCL1. The power path circuit 430, in response to the path control signal SCL1, connects the first terminal of the switch SW1 to the second terminal of the switch SW1, connects the first terminal of the switch SW2 to the second terminal of the switch SW2, and connects the first terminal of the switch SW3 to the second terminal of the switch SW3. Therefore, the power delivering path L1 is generated. When the elevator is at rest, the controller 340 provides the path control signal SCL2. The power path circuit 430, in response to the path control signal SCL2, connects the first terminal of the switch SW1 to the third terminal of the switch SW1, connects the first terminal of the switch SW2 to the third terminal of the switch SW2, and connects the first terminal of the switch SW3 to the third terminal of the switch SW3. Therefore, the charging path L2 is generated.

In some embodiments, during the movement of the elevator, the motor MTR may rotate without receiving the driving power PDR. In the above situation, the controller 340 controls the power path circuit 430 to generate the charging path L3 between the conversion circuit 320 and the motor MTR, and controls the conversion circuit 320 to serve as a rectifier, thereby converting the power provided by the motor MTR into the battery power PB. In this way, while the elevator car is rising, the battery device 310 can be charged when the motor MTR does not receive the driving power PDR. The charging path L3 is opposite to the power delivering path L1.

In some embodiments, when the voltage value of the battery power PB stored in the battery device 310 is greater than a preset value, the controller 340 controls the power path circuit 430 to generate the power delivering path L4 between the conversion circuit 320 and the power source PS, and controls the conversion circuit 320 to serve as a multi-phase power inverter, thereby converting the battery power PB into the source power PPR, and providing the source power PPR to the power source PS. In this way, when the voltage value of the battery power PB stored in the battery device 310 is greater than a preset value, the battery power PB can be provided to an external mains power grid. The power delivering path L4 is opposite to the charging path L2.

In the above-mentioned embodiments, the power delivering path L4 and the charging path L3 are provided in different periods.

To sum up, when the elevator is moving, the controller controls the power path circuit to generate a power delivering path between the conversion circuit and the motor, and controls the conversion circuit to convert the battery power into the driving power. When the elevator is at rest, the controller controls the power path circuit to generate a charging path between the conversion circuit and the power source, and controls the conversion circuit to convert the source power into the battery power. Therefore, the conversion circuit uses the battery power to charge the battery device during the period when the elevator is at rest. The voltage value of the battery device is maintained at a high voltage value. During the charging of the battery device, the charging current may be reduced. In this way, the driving system does not need to be disposed with an additional slow start circuit to reduce the charging current. Furthermore, when the elevator is at rest, the conversion circuit can convert the source power into the battery power. Therefore, the driving system does not need to be disposed with an additional rectifier. **In** this way, the cost of the driving system can be reduced.

## Claims

1. A driving system (100, 200, 300, 400) for an elevator, comprising:
a motor (MTR), configured to control a movement of the elevator in response to a driving power (PDR);
a power source (PS), configured to provide a source power (PPR);
a battery device (110, 310), configured to store a battery power (PB);
a conversion circuit (120, 320), coupled to the battery device (110, 310);
a power path circuit (130, 330, 430), coupled to the power source (PS), the motor (MTR) and the conversion circuit (120, 320); and
a controller (140, 340), coupled to the conversion circuit (120) and the power path circuit (130), and configured to:
when the elevator is moving, control the power path circuit (130, 330, 430) to generate a first power delivering path (L1) between the conversion circuit (120, 320) and the motor (MTR), and control the conversion circuit (120, 320) to convert the battery power (PB) into the driving power (PDR), and **characterized in that**
when the elevator is at rest, the controller (140, 340) is further configured to control the power path circuit (130, 330, 430) to generate a first charging path (L2) between the conversion circuit (120, 320) and the power source (PS), and control the conversion circuit (120, 320) to convert the source power (PPR) into the battery power (PB).

2. The driving system (100, 200, 300, 400) according to claim 1, wherein when the elevator is at rest, the battery device (110, 310) receives the battery power (PB) through the first charging path (L2).

3. The driving system (100, 200, 300, 400) according to claim 1, wherein when the elevator is moving, the motor (MTR) receives the driving power (PDR) through the first power delivering path (L1).

4. The driving system (100, 200) according to claim 1, wherein the battery device (110) is an aluminum battery device.

5. The driving system (300, 400) according to claim 1, wherein when the elevator is moving, the controller (340) controls the conversion circuit (320) to serve as a multi-phase power inverter.

6. The driving system (300, 400) according to claim 1, wherein the conversion circuit (320) comprises:
a first power switch (PS1), having a first diode (D1), wherein a first terminal of the first power switch (PS1) is coupled to a first terminal of the battery device (310), a second terminal of the first power switch (PS1) is coupled to the power path circuit (330, 430), and a control terminal of the first power switch (PS1) is coupled to the controller (340);
a second power switch (PS2), having a second diode (D2), wherein a first terminal of the second power switch (PS2) is coupled to the second terminal of the first power switch (PS1), a second terminal of the second power switch (PS2) is coupled to a second terminal of the battery device (310), and a control terminal of the second power switch (PS2) is coupled to the controller (340);
a third power switch (PS3), having a third diode (D3), wherein a first terminal of the third power switch (PS3) is coupled to the first terminal of the battery device (310), a second terminal of the third power switch (PS3) is coupled to the power path circuit (330, 730), and a control terminal of the third power switch (PS3) is coupled to the controller (340);
a fourth power switch (PS4), having a fourth diode (D4), wherein a first terminal of the fourth power switch (PS4) is coupled to the second terminal of the third power switch (PS3), a second terminal of the fourth power switch (PS4) is coupled to the second terminal of the battery device (310), and a control terminal of the fourth power switch (PS4) is coupled to the controller (340);
a fifth power switch (PS5), having a fifth diode (D5), wherein a first terminal of the fifth power switch (PS5) is coupled to the first terminal of the battery device (310), a second terminal of the fifth power switch (PS5) is coupled to the power path circuit (330, 430), and a control terminal of the fifth power switch (PS5) is coupled to the controller (340); and
a sixth power switch (PS6), having a sixth diode (D6), wherein a first terminal of the sixth power switch (PS6) is coupled to the second terminal of the fifth power switch (PS5), a second terminal of the sixth power switch (PS6) is coupled to the second terminal of the battery device (310), and a control terminal of the sixth power switch (PS6) is coupled to the controller (340).

7. The driving system (300, 400) according to claim 6, wherein when the elevator is at rest, the controller (340) disconnects the first power switch (PS1), the second power switch (PS2), the third power switch (PS3), the fourth power switch (PS4), the fifth power switch (PS5) and the sixth power switch (PS6) so that the conversion circuit (320) serves as a rectification circuit.

8. The driving system (400) according to claim 1, wherein the power path circuit (430) is implemented by a plurality of single pole double throw switches.

9. The driving system (300) according to claim 1, wherein the power path circuit (330) comprises:
a first path switch circuit (M1), coupled between the conversion circuit (320) and the motor (MTR); and
a second path switch circuit (M2), coupled between the conversion circuit (320) and the power source (PS).

10. The driving system (300) according to claim 9, wherein:
when the elevator is moving, the controller (340) turns on the first path switch circuit (M1) and turns off the second path switch circuit (M2), and
when the elevator is at rest, the controller (340) turns on the second path switch circuit (M2) and turns off the first path switch circuit (M1).

11. The driving system (200) according to claim 1, further comprising:
a protection circuit (250), coupled to the battery device (110) and the controller (140),
wherein the controller enables the protection circuit (250) according to a voltage value of the battery power (PB).

12. The driving system (300, 400) according to claim 11, wherein the protection circuit (350) comprises:
a resistor (R), a first terminal of the resistor (R) being coupled to a first terminal of the battery device (310); and
a protection switch (SWP), a first terminal of the protection switch (SWP) being coupled to a second terminal of the resistor (R), a second terminal of the protection switch (SWP) being coupled to a second terminal of the battery device (310), and a control terminal of the protection switch (SWP) being coupled to the controller (340).

13. The driving system (300, 400) according to claim 1, wherein while the elevator is moving, when the motor (MTR) rotates without receiving the driving power (PDR), the controller (340) controls the power path circuit (330, 430) to generate a second charging path (L3) between the conversion circuit (320) and the motor (MTR), and controls the conversion circuit (320) to convert a power provided by the motor (MTR) into the battery power (PB), wherein the second charging path (L3) is opposite to the first power delivering path (L1).

14. The driving system (300, 400) according to claim 1, wherein when a voltage value of the battery power (PB) stored in the battery device (310) is greater than a preset value, the controller (340) controls the power path circuit (330, 430) to generate a second power delivering path (L4) between the conversion circuit (320) and the power source (PS), controls the conversion circuit (320) to convert the battery power (PB) into the source power (PPR), and provides the source power (PPR) to the power source (PS), wherein the second power delivering path (L4) is opposite to the first charging path (L2).

## Patentansprüche

1. Antriebssystem (100, 200, 300, 400) für einen Aufzug, umfassend:
einen Motor (MTR), der so konfiguriert ist, dass er eine Bewegung des Aufzugs in Reaktion auf eine Antriebsleistung (PDR) steuert;
eine Stromquelle (PS), die so konfiguriert ist, dass sie eine Quellenleistung (PPR) bereitstellt;
eine Batterievorrichtung (110, 310), die so konfiguriert ist, dass sie eine Batterieleistung (PB) speichert;
eine Umwandlungsschaltung (120, 320), die mit der Batterievorrichtung (110, 310) gekoppelt ist;
eine Leistungspfadschaltung (130, 330, 430), die mit der Stromquelle (PS), dem Motor (MTR) und der Umwandlungsschaltung (120, 320) gekoppelt ist; und
eine Steuereinheit (140, 340), die mit der Umwandlungsschaltung (120) und der Leistungspfadschaltung (130) gekoppelt ist und so konfiguriert ist, dass sie:
wenn sich der Aufzug bewegt, die Leistungspfadschaltung (130, 330, 430) so steuert, dass ein erster Leistungsbereitstellungspfad (L1) zwischen der Umwandlungsschaltung (120, 320) und dem Motor (MTR) erzeugt wird, und die Umwandlungsschaltung (120, 320) so steuert, dass die Batterieleistung (PB) in die Antriebsleistung (PDR) umgewandelt wird, und
**dadurch gekennzeichnet, dass**
wenn der Aufzug ruht, die Steuereinheit (140, 340) ferner so konfiguriert ist, dass sie die Leistungspfadschaltung (130, 330, 430) so steuert, dass ein erster Ladepfad (L2) zwischen der Umwandlungsschaltung (120, 320) und der Stromquelle (PS) erzeugt wird, und die Umwandlungsschaltung (120, 320) so steuert, dass die Quellenleistung (PPR) in die Batterieleistung (PB) umgewandelt wird.

2. Antriebssystem (100, 200, 300, 400) nach Anspruch 1, wobei, wenn der Aufzug ruht, die Batterievorrichtung (110, 310) die Batterieleistung (PB) über den ersten Ladepfad (L2) empfängt.

3. Antriebssystem (100, 200, 300, 400) nach Anspruch 1, wobei, wenn sich der Aufzug bewegt, der Motor (MTR) die Antriebsleistung (PDR) über den ersten Leistungsbereitstellungspfad (L1) erhält.

4. Antriebssystem (100, 200) nach Anspruch 1, wobei die Batterievorrichtung (110) eine Aluminiumbatterievorrichtung ist.

5. Antriebssystem (300, 400) nach Anspruch 1, wobei, wenn sich der Aufzug bewegt, die Steuereinheit (340) die Umwandlungsschaltung (320) so steuert, dass sie als ein Mehrphasen-Wechselrichter dient.

6. Antriebssystem (300, 400) nach Anspruch 1, wobei die Umwandlungsschaltung (320) umfasst:
einen ersten Leistungsschalter (PS1) mit einer ersten Diode (D1), wobei ein erster Anschluss des ersten Leistungsschalters (PS1) mit einem ersten Anschluss der Batterievorrichtung (310) gekoppelt ist, ein zweiter Anschluss des ersten Leistungsschalters (PS1) mit der Leistungspfadschaltung (330, 430) gekoppelt ist und ein Steueranschluss des ersten Leistungsschalters (PS1) mit der Steuereinheit (340) gekoppelt ist;
einen zweiten Leistungsschalter (PS2) mit einer zweiten Diode (D2), wobei ein erster Anschluss des zweiten Leistungsschalters (PS2) mit dem zweiten Anschluss des ersten Leistungsschalters (PS1) gekoppelt ist, ein zweiter Anschluss des zweiten Leistungsschalters (PS2) mit einem zweiten Anschluss der Batterievorrichtung (310) gekoppelt ist und ein Steueranschluss des zweiten Leistungsschalters (PS2) mit der Steuereinheit (340) verbunden ist;
einen dritten Leistungsschalter (PS3) mit einer dritten Diode (D3), wobei ein erster Anschluss des dritten Leistungsschalters (PS3) mit dem ersten Anschluss der Batterievorrichtung (310) verbunden ist, ein zweiter Anschluss des dritten Leistungsschalters (PS3) mit der Leistungspfadschaltung (330, 730) verbunden ist und ein Steueranschluss des dritten Leistungsschalters (PS3) mit der Steuereinheit (340) verbunden ist;
einen vierten Leistungsschalter (PS4) mit einer vierten Diode (D4), wobei ein erster Anschluss des vierten Leistungsschalters (PS4) mit dem zweiten Anschluss des dritten Leistungsschalters (PS3) verbunden ist, ein zweiter Anschluss des vierten Leistungsschalters (PS4) mit dem zweiten Anschluss der Batterievorrichtung (310) verbunden ist und ein Steueranschluss des vierten Leistungsschalters (PS4) mit der Steuereinheit (340) verbunden ist;
einen fünften Leistungsschalter (PS5) mit einer fünften Diode (D5), wobei ein erster Anschluss des fünften Leistungsschalters (PS5) mit dem ersten Anschluss der Batterievorrichtung (310) gekoppelt ist, ein zweiter Anschluss des fünften Leistungsschalters (PS5) mit der Leistungspfadschaltung (330, 430) gekoppelt ist und ein Steueranschluss des fünften Leistungsschalters (PS5) mit der Steuereinheit (340) verbunden ist; und
einen sechsten Leistungsschalter (PS6) mit einer sechsten Diode (D6), wobei ein erster Anschluss des sechsten Leistungsschalters (PS6) mit dem zweiten Anschluss des fünften Leistungsschalters (PS5) verbunden ist, ein zweiter Anschluss des sechsten Leistungsschalters (PS6) mit dem zweiten Anschluss der Batterievorrichtung (310) verbunden ist, und ein Steueranschluss des sechsten Leistungsschalters (PS6) mit der Steuereinheit (340) verbunden ist.

7. Antriebssystem (300, 400) nach Anspruch 6, wobei, wenn der Aufzug ruht, die Steuereinheit (340) den ersten Leistungsschalter (PS1), den zweiten Leistungsschalter (PS2), den dritten Leistungsschalter (PS3), den vierten Leistungsschalter (PS4), den fünften Leistungsschalter (PS5) und den sechsten Leistungsschalter (PS6) trennt, so dass die Umwandlungsschaltung (320) als eine Gleichrichterschaltung dient.

8. Antriebssystem (400) nach Anspruch 1, wobei die Leistungspfadschaltung (430) durch eine Vielzahl von einpoligen Umschaltern implementiert ist.

9. Antriebssystem (300) nach Anspruch 1, wobei die Leistungspfadschaltung (330) umfasst:
eine erste Pfadschalterschaltung (M1), die zwischen der Umwandlungsschaltung (320) und dem Motor (MTR) gekoppelt ist; und
eine zweite Pfadschalterschaltung (M2), die zwischen der Umwandlungsschaltung (320) und der Stromquelle (PS) gekoppelt ist.

10. Antriebssystem (300) nach Anspruch 9, wobei:
wenn sich der Aufzug bewegt, die Steuereinheit (340) die erste Pfadschalterschaltung (M1) einschaltet und die zweite Pfadschalterschaltung (M2) ausschaltet, und
wenn der Aufzug ruht, die Steuereinheit (340) die zweite Pfadschalterschaltung (M2) einschaltet und die erste Pfadschalterschaltung (M1) ausschaltet.

11. Antriebssystem (200) nach Anspruch 1, ferner umfassend:
eine Schutzschaltung (250), die mit der Batterievorrichtung (110) und der Steuereinheit (140) gekoppelt ist,
wobei die Steuereinheit die Schutzschaltung (250) entsprechend einem Spannungswert der Batterieleistung (PB) aktiviert.

12. Antriebssystem (300, 400) nach Anspruch 11, wobei die Schutzschaltung (350) umfasst:
einen Widerstand (R), wobei ein erster Anschluss des Widerstands (R) mit einem ersten Anschluss der Batterievorrichtung (310) gekoppelt ist; und
einen Schutzschalter (SWP), wobei ein erster Anschluss des Schutzschalters (SWP) mit einem zweiten Anschluss des Widerstands (R) gekoppelt ist, ein zweiter Anschluss des Schutzschalters (SWP) mit einem zweiten Anschluss der Batterievorrichtung (310) gekoppelt ist und ein Steueranschluss des Schutzschalters (SWP) mit der Steuereinheit (340) gekoppelt ist.

13. Antriebssystem (300, 400) nach Anspruch 1, wobei, während sich der Aufzug bewegt, wenn der Motor (MTR) ohne Zufuhr der Antriebskraft (PDR) dreht, die Steuereinheit (340) die Leistungspfadschaltung (330, 430) so steuert, dass ein zweiter Ladepfad (L3) zwischen der Umwandlungsschaltung (320) und dem Motor (MTR) erzeugt wird, und die Umwandlungsschaltung (320) so steuert, dass sie eine von dem Motor (MTR) bereitgestellte Leistung in die Batterieleistung (PB) umwandelt, wobei der zweite Ladepfad (L3) dem ersten Leistungsbereitstellungspfad (L1) entgegengesetzt ist.

14. Antriebssystem (300, 400) nach Anspruch 1, wobei, wenn ein Spannungswert der in der Batterievorrichtung (310) gespeicherten Batterieleistung (PB) größer als ein voreingestellter Wert ist, die Steuereinheit (340) die Leistungspfadschaltung (330, 430) so steuert, dass ein zweiter Leistungsbereitstellungspfad (L4) zwischen der Umwandlungsschaltung (320) und der Stromquelle (PS) erzeugt wird, die Umwandlungsschaltung (320) so steuert, dass sie die Batterieleistung (PB) in die Quellenleistung (PPR) umwandelt, und der Stromquelle (PS) die Quellenleistung (PPR) bereitstellt, wobei der zweite Leistungsbereitstellungspfad (L4) dem ersten Ladepfad (L2) entgegengesetzt ist.

## Revendications

1. Système d'entraînement (100, 200, 300, 400) pour un ascenseur, comprenant:
un moteur (MTR), configuré pour contrôler le mouvement de l'ascenseur en réponse à une puissance d'entraînement (PDR);
une source d'alimentation (PS), configurée pour fournir une puissance source (PPR);
un dispositif de batterie (110, 310), configuré pour stocker une puissance de batterie (PB);
un circuit de conversion (120, 320), couplé au dispositif de batterie (110, 310);
un circuit de chemin d'alimentation (130, 330, 430), couplé à la source d'alimentation (PS), au moteur (MTR) et au circuit de conversion (120, 320);
et un contrôleur (140, 340), couplé au circuit de conversion (120) et au circuit de chemin d'alimentation (130), et configuré pour:
lorsque l'ascenseur est en mouvement, commander le circuit de chemin d'alimentation (130, 330, 430) pour générer un premier chemin d'alimentation (L1) entre le circuit de conversion (120, 320) et le moteur (MTR), et commander le circuit de conversion (120, 320) pour convertir l'énergie de la batterie (PB) en énergie d'entraînement (PDR), et **caractérisé en ce que**
lorsque l'ascenseur est à l'arrêt, le contrôleur (140, 340) est en outre configuré pour commander le circuit de chemin d'alimentation (130, 330, 430) afin de générer un premier chemin de charge (L2) entre le circuit de conversion (120, 320) et la source d'alimentation (PS), et de commander le circuit de conversion (120, 320) afin de convertir la puissance de la source (PPR) en puissance de batterie (PB).

2. Système d'entraînement (100, 200, 300, 400) selon la revendication 1, dans lequel, lorsque l'ascenseur est à l'arrêt, le dispositif à batterie (110, 310) reçoit l'énergie de batterie (PB) par l'intermédiaire du premier chemin de charge (L2).

3. Système d'entraînement (100, 200, 300, 400) selon la revendication 1, dans lequel, lorsque l'ascenseur est en mouvement, le moteur (MTR) reçoit la puissance d'entraînement (PDR) par l'intermédiaire du premier chemin d'alimentation (L1).

4. Système d'entraînement (100, 200) selon la revendication 1, dans lequel le dispositif à batterie (110) est un dispositif à batterie en aluminium.

5. Système d'entraînement (300, 400) selon la revendication 1, dans lequel, lorsque l'ascenseur est en mouvement, le contrôleur (340) commande le circuit de conversion (320) pour qu'il serve d'onduleur à plusieurs phases.

6. Système d'entraînement (300, 400) selon la revendication 1, dans lequel le circuit de conversion (320) comprend:
un premier commutateur de puissance (PS1), comportant une première diode (D1), dans lequel une première borne du premier commutateur de puissance (PS1) est couplée à une première borne du dispositif à batterie (310), une deuxième borne du premier commutateur de puissance (PS1) est couplée au circuit de chemin d'alimentation (330, 430), et
une borne de commande du premier commutateur de puissance (PS1) est couplée au contrôleur (340) ;un deuxième commutateur d'alimentation (PS2), comportant une deuxième diode (D2), dans lequel une première borne du deuxième commutateur d'alimentation (PS2) est couplée à la deuxième borne du premier commutateur d'alimentation (PS1),
une deuxième borne du deuxième commutateur d'alimentation (PS2) est couplée à une deuxième borne du dispositif à batterie (310), et une borne de commande du deuxième commutateur d'alimentation (PS2) est couplée au contrôleur (340);
un troisième commutateur d'alimentation (PS3), comportant une troisième diode (D3), dans lequel une première borne du troisième commutateur d'alimentation (PS3) est couplée à la première borne du dispositif de batterie (310), une deuxième borne du troisième commutateur d'alimentation (PS3) est couplée au circuit de chemin d'alimentation (330, 730), et une borne de commande du troisième commutateur d'alimentation (PS3) est couplée au contrôleur (340); un quatrième commutateur d'alimentation (PS4), comportant une quatrième diode (D4), dans lequel une première borne du quatrième commutateur d'alimentation (PS4) est couplée à la deuxième borne du troisième commutateur d'alimentation (PS3), une deuxième borne du quatrième commutateur d'alimentation (PS4) est couplée à la deuxième borne du dispositif à batterie (310), et
une borne de commande du quatrième commutateur d'alimentation (PS4) est couplée au contrôleur (340);
un cinquième commutateur d'alimentation (PS5), comportant une cinquième diode (D5), dans lequel une première borne du cinquième commutateur d'alimentation (PS5) est couplée à la première borne du dispositif de batterie (310), une deuxième borne du cinquième commutateur d'alimentation (PS5) est couplée au circuit de chemin d'alimentation (330, 430), et une borne de commande du cinquième commutateur d'alimentation (PS5) est couplée au contrôleur (340); et un sixième commutateur d'alimentation (PS6), comportant une sixième diode (D6), dans lequel une première borne du sixième commutateur d'alimentation (PS6) est couplée à la deuxième borne du cinquième commutateur d'alimentation (PS5), une deuxième borne du sixième commutateur d'alimentation (PS6) est couplée à la deuxième borne du dispositif de batterie (310), et une borne de commande du sixième commutateur d'alimentation (PS6) est couplée au contrôleur (340).

7. Système d'entraînement (300, 400) selon la revendication 6, dans lequel,
lorsque l'ascenseur est à l'arrêt, le contrôleur (340) déconnecte le premier commutateur d'alimentation (PS1), le deuxième commutateur d'alimentation (PS2), le troisième interrupteur d'alimentation (PS3), le quatrième interrupteur d'alimentation (PS4),
le cinquième interrupteur d'alimentation (PS5) et le sixième interrupteur d'alimentation (PS6) de sorte que le circuit de conversion (320) serve de circuit de redressement.

8. Système d'entraînement (400) selon la revendication 1, dans lequel le circuit de chemin d'alimentation (430) est mis en œuvre par une pluralité d'interrupteurs unipolaires à double voie.

9. Système d'entraînement (300) selon la revendication 1, dans lequel le circuit de chemin d'alimentation (330) comprend:
un premier circuit de commutation de chemin (M1), couplé entre le circuit de conversion (320) et le moteur (MTR); et un deuxième circuit de commutation de chemin (M2), couplé entre le circuit de conversion (320) et la source d'alimentation (PS).

10. Système d'entraînement (300) selon la revendication 9, dans lequel:
lorsque l'ascenseur est en mouvement, le contrôleur (340) active le premier circuit de commutation de chemin (M1) et désactive le deuxième circuit de commutation de chemin (M2), et lorsque l'ascenseur est à l'arrêt, le contrôleur (340) active le deuxième circuit de commutation de chemin (M2) et désactive le premier circuit de commutation de chemin (M1).

11. Système d'entraînement (200) selon la revendication 1, comprenant en outre:
un circuit de protection (250), couplé au dispositif de batterie (110) et au contrôleur (140), dans lequel le contrôleur active le circuit de protection (250) en fonction d'une valeur de tension de l'alimentation de batterie (PB).

12. Système d'entraînement (300, 400) selon la revendication 11, dans lequel le circuit de protection (350) comprend:
une résistance (R), une première borne de la résistance (R) étant couplée à une première borne du dispositif de batterie (310); et
un interrupteur de protection (SWP), une première borne de l'interrupteur de protection (SWP) étant couplée à une deuxième borne de la résistance (R), une deuxième borne de l'interrupteur de protection (SWP) étant couplée à une deuxième borne du dispositif de batterie (310), et une borne de commande de l'interrupteur de protection (SWP) étant couplée au contrôleur (340).

13. Système d'entraînement (300, 400) selon la revendication 1, dans lequel, pendant que l'ascenseur se déplace, lorsque le moteur (MTR) tourne sans recevoir la puissance d'entraînement (PDR), le contrôleur (340) commande le circuit de chemin d'alimentation (330, 430) pour générer un deuxième chemin de charge (L3) entre le circuit de conversion (320) et le moteur (MTR), et commande le circuit de conversion (320) pour convertir une puissance fournie par le moteur (MTR) en puissance de batterie (PB), dans lequel le deuxième chemin de charge (L3) est opposé au premier chemin de fourniture de puissance (L1).

14. Système d'entraînement (300, 400) selon la revendication 1, dans lequel,
lorsque la valeur de tension de l'énergie de batterie (PB) stockée dans le dispositif de batterie (310) est supérieure à une valeur prédéfinie, le contrôleur (340) commande le circuit de chemin d'alimentation (330, 430) pour générer un deuxième chemin de fourniture d'énergie (L4) entre le circuit de conversion (320) et la source d'alimentation (PS), commande le circuit de conversion (320) pour convertir l'énergie de la batterie (PB) en énergie de la source (PPR), et fournit l'énergie de la source (PPR) à la source d'alimentation (PS), dans lequel le deuxième chemin d'alimentation (L4) est opposé au premier chemin de charge (L2).
